# EUROPÄISCHE PATENTSCHRIFT

(11) **EP 0 510 022 B1**
(45) Veröffentlichungstag und Bekanntmachung des Hinweises auf die Patenterteilung: **10.05.1995**
(21) Anmeldenummer: 91901541.2
(22) Anmeldetag: 09.01.1991
(51) Int. Cl.: F16K 31/06, H01F 7/08

(54) **ELEKTROMAGNETISCH BETÄTIGBARES VENTIL**
ELECTROMAGNETICALLY OPERATED VALVE
SOUPAPE A COMMANDE ELECTROMAGNETIQUE

(30) Priorität: 20.01.1990 DE 4001562; 26.05.1990 DE 4016990
(43) Veröffentlichungstag der Anmeldung: 28.10.1992
(73) Patentinhaber: ROBERT BOSCH GMBH, 70442 Stuttgart (DE)
(72) Erfinder: SICH, Bernhard, D-7149 Freiberg (DE)
(86) Internationale Anmeldenummer: DE9100005
(87) Internationale Veröffentlichungsnummer: WO9110854

(56) Entgegenhaltungen:
- DE-B- 1 204 485
- DE-U- 8 809 143

## Beschreibung

### Stand der Technik

Die Erfindung geht aus von einem elektromagnetisch betätigbaren Ventil nach der Gattung des Hauptanspruchs. Aus der DE-B 12 04 485 ist ein derartiges Ventil bekannt, bei dem der Ankerraum zur Dämpfung mit Öl gefüllt und über einen Drosselkanal mit einem luftgefüllten Ausgleichsraum verbunden ist. Dieser Ausgleichsraum ist über eine Entlüftungsvorrichtung mit der Umgebung (Atmosphäre) verbunden. Durch entsprechende Justierung soll ein Luftaustausch ermöglicht werden und gleichzeitig der Austritt von Öl verhindert werden.

Bei derartigen Ventilen ist der Ankerraum auch sehr oft über eine Öffnung mit einem das Ventil aufnehmenden, mit Drucköl gefüllten Raum verbunden. Dabei kann es vorkommen, daß Schmutzpartikel in den Ankerraum eindringen und die Funktionstüchtigkeit des Ventils beeinträchtigen. Man hat schon versucht, diesen Vorgang durch Einbau von Filtern oder durch Zwischenvoluminia zu verhindern, was jedoch aufwendig ist.

### Vorteile der Erfindung

Das erfindungsgemäße Ventil mit den kennzeichnenden Merkmalen des Hauptanspruchs hat demgegenüber den Vorteil, daß auf einfachste Weise das Eindringen von verschmutztem Öl in das Ventil, insbesondere den Ankerraum, verhindert wird. Weitere vorteilhafte Ausgestaltungen der Erfindung ergeben sich aus den Unteransprüchen, der nachfolgenden Beschreibung und Zeichnung.

### Zeichnung

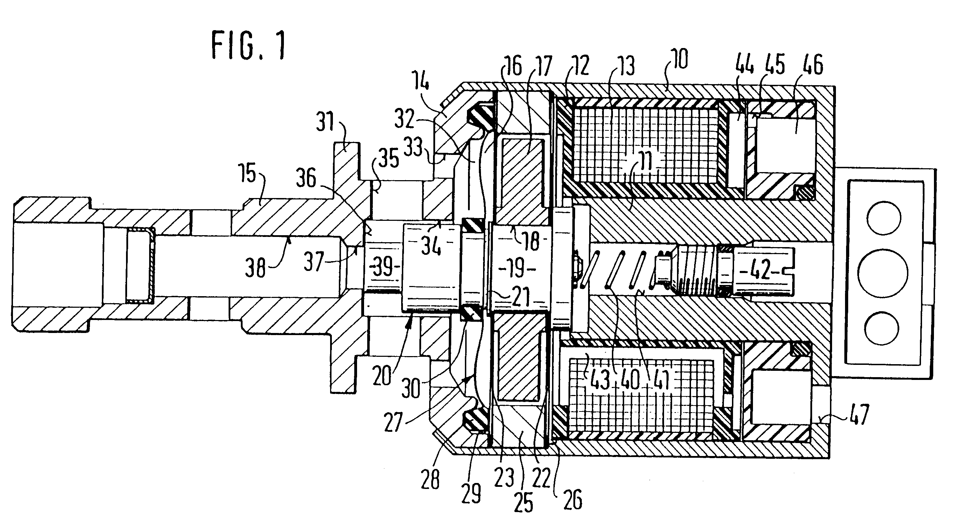

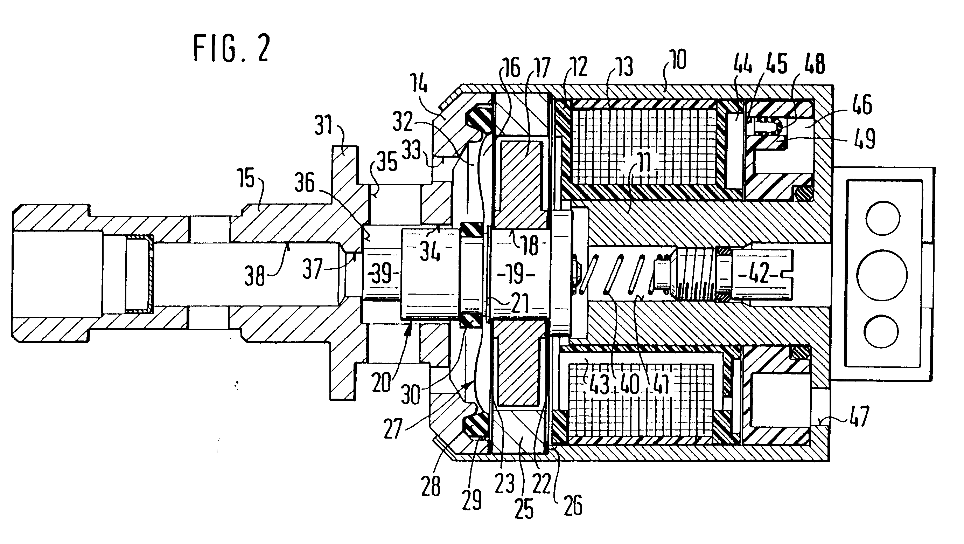

Ein Ausführungsbeispiel der Erfindung ist in der Beschreibung und Zeichnung wiedergegeben. Letztere zeigt in Figur 1 einen Längsschnitt durch ein elektromagnetisch betätigbares Ventil, insbesondere ein Proportionalventil. Figur 2 zeigt eine Abwandlung des Ausführungsbeispiels.

### Beschreibung des Erfindungsbeispiels

Das Elektromagnetventil weist ein etwa glockenförmiges, metallisches Gehäuses 10 auf, das einen mittigen, sich ins Gehäuseinneren erstreckenden Fortsatz 11 hat, um den herum der Spulenkörper 12 mit Wicklung 13 angeordnet ist. In den offenen Teil des Gehäuses 10 ist der Flanschteil 14 eines Ventilteiles 15 eingebördelt, welcher sich gleichachsig zum Ventilgehäuse erstreckt. Unterhalb des Spulenkörpers 12 ist im Gehäuse 10 der Ankerraum 16 gebildet. Dort befindet sich der als Flachanker ausgebildete, elastisch gelagerte Anker 17. Er weist eine mittige Bohrung 18 auf, in welche der Kopf 19 eines Ventilkörpers 20 eingesteckt und dort festgehalten ist, und zwar mit Hilfe eines Sprengrings 21, der den Anker samt zwei Membranfedern 22, 23 gegen den flanschartigen Rand des Kopfes 19 hält. Die Membranfedern sind an ihrem Außenumfang im Gehäuse festgehalten, und zwar mittels eines Außenrings 25, welcher eingeklemmt ist zwischen einer Ringschulter 26 im Gehäuse 10 und dem Flanschteil 14 des Ventilgehäuses 15. Hinter der Membranfeder 23 befindet sich noch eine flexible Gummimembran 27, die mit ihrem wulstartigen Außenrand 28 in einer Ringnut 29 am Flanschteil 14 festgehalten ist und mit einem inneren Ringwulst 30 am Ventilkörper 20 anliegt. Die Gummimembran dient zur Abdichtung des Ventilteils gegenüber dem Ankerraum 16. Unterhalb des Flanschteils 14 befindet sich am Ventilteil 15 ein Flansch 31, mit welchem das Ventilteil samt dem Gehäuse 10 in einem Maschinenteil, z. B. einem Getriebegehäuse befestigt ist.

Unterhalb des Ankerraums 16 bzw. der Gummimembran 27 befindet sich ein flacher Raum 32, in den von der Außenseite des Flanschteils 14 her mehrere Bohrungen 33 eindringen. Der Raum 32 geht in eine Längsbohrung 34 über, durch welche der Ventilkörper 20 mit reichlich Spiel hindurchragt. In die Bohrung 34 dringt eine durchgehende Querbohrung 35 ein, und am Grund der Bohrung 34 ist eine Ringschulter 36 ausgebildet, an die sich eine achsgleich zur Bohrung 34 verlaufende Bohrung 37 anschließt, welche in einen erweiterten Bohrungsteil 38 übergeht, der sich durch das gesamte Ventilteil erstreckt. Alle diese Bohrungsteile liegen konzentrisch zueinander und achsgleich zum Ventilkörper 20. Dieser hat ein Endteil 39, welcher in Endstellung des Ventilkörpers die Bohrung 37 versperrt. Alle die zuletzt beschriebenen Teile, nämlich der Raum 32 und die genannten Bohrungen liegen im Getriebeöl eines Getriebegehäuses.

Auf den Kopf 19 des Ventilkörpers 20 wirkt eine Druckfeder 40 ein, welche in einer Bohrung 41 des Fortsatzes 11 angeordnet ist und sich dort an einer Verstellschraube 42 abstützt.

Die beiden Membranfedern 22, 23 weisen keine geschlossene Fläche auf, sondern haben mehrere Durchbrüche. Derartige Membranfedern sind bei solchen Ventilen allgemein üblich und deshalb nicht weiter beschrieben. Es soll damit lediglich zum Ausdruck gebracht werden, daß sich Druckmittel über den gesamten Ankerraum 16 verteilen kann. Vom Ankerraum führt entlang des Spulenkörpers ein Kanal 43 zu einem ringförmigen flachen ersten Ausgleichsraum 44, von dem eine kurze Bohrung 45 zu einem zweiten, ebenfalls ringförmigen Ausgleichsraum 46 führt. Die beiden Ausgleichsräume 44, 46 befinden sich teilweise im Spulenkörper und teilweise in einem Kunststoffkörper, welcher am Boden des Gehäuses 10 angeordnet ist. Vom zweiten Ausgleichsraum 46 führt eine Bohrung 47 ins Freie, d. h. ebenfalls in das Getriebegehäuse. Die zuletzt geschilderten Räume, nämlich der Ankerraum 16, der Kanal 43, die Bohrung 41 und teilweise auch der erste Ausgleichsraum 44 sind zwecks Dämpfung des Ventilkörpers mit absolut sauberem Öl gefüllt. Damit in diese Räume kein verschmutztes Öl von außerhalb, d. h. vom Getriebegehäuse eindringen kann, ist der zweite Ausgleichsraum 46 teilweise mit Luft gefüllt. Hierzu muß bemerkt werden, daß das gesamte Ventil in waagrechter Stellung montiert ist und daß der obere Teil des Ausgleichsraum 46 keine Verbindung nach außen hat, so daß sich in diesem oberen Teil stets das Luftpolster befindet, das sich über die Bohrung 45 noch bis in den ersten Ausgleichsraum 44 erstreckt. Bei temperaturbedingten Volumenänderungen des Öls oder einer Volumenänderung des Ankerraums aufgrund einer Bewegung des Ankers 17 und damit auch der Bewegung der den Ankerraum abdichtenden Gummimembran 27 wird das Luftpolster zwischen den zwei Ausgleichskammern hin- und herbewegt. Dadurch kann kein verschmutztes Öl in den Ankerraum gelangen, was zum Ausfall des Ventils führen könnte. Die zwei Öle - nämlich das saubere und das verschmutze - werden durch die Luft in jedem Betriebszustand voneinander getrennt.

Beim Ausführungsbeispiel nach Figur 2 befindet sich in der die Ausgleichsräume 44 und 46 verbindenden Bohrung 45 ein fest eingebrachter Siebeinsatz 48. Die Bohrung ist für diesen Zweck in einem verlängerten Stutzen 49 ausgebildet. Der Siebeinsatz 48 hat etwa die Form eines Bechers mit gerundetem Boden. Seine offene Seite ist dem Raum 44 zugewandt. Bei Lagerung und/oder Transport des Ventils kann durch Abweichen von der Einbaustellung eine Verbindung des oberen Teils des Ausgleichraumes 46 nach außen entstehen. Der fest eingebrachte Siebeinsatz 48 in der Bohrung 45 verhindert das Auslaufen des sauberen Öls, da durch die Bohrung 45 und den Siebeinsatz 48 an dessen Boden ein sich verengender ringförmiger, etwa konischer Spalt gebildet wird, durch den das Öl aufgrund von Oberflächen- und Kapillarkräften hineingezogen und gehalten wird, ohne daß sich in dem offenen Ausgleichsraum 44 ein Überdruck aufbauen kann.

Auf die genaue Funktionsweise des Ventils ist nicht weiter eingegangen, da nicht erfindungswesentlich und an sich bekannt. Es sei nur erwähnt, daß der Ventilkörper 20 bzw. der Kopf 39 die Verbindung von einer nicht dargestellten Pumpe über die Bohrung 35 zu einem Behälter steuert oder über eine andere Bohrung 48 im Ventilgehäuse 15 zu einem Verbraucher.

## Patentansprüche

1. Elektromagnetisch betätigbares Ventil, insbesondere Proportionalventil, mit einem mit Federmitteln (22, 23) elastisch am Gehäuse (10) desselben angelenkten Anker (17) und einem von diesem betätigbaren Ventilkörper (20) zur Druckmittelsteuerung, der von einer Druckfeder (40) belastet ist und in einer Bohrung (34) des Ventilgehäuses mit reichlich Spiel bewegbar ist und wobei der Ankerraum (16) zwecks Dämpfung des Ankers mit Flüssigkeit gefüllt ist, die bis in einen Volumenänderungen der Flüssigkeit kompensierenden Ausgleichsraum (44) eindringt, der an dem dem Anker abgewandten Teil des Gehäuses des Ventils ausgebildet ist, dadurch gekennzeichnet, daß der Ausgleichsraum (44) über einen Kanal (45) mit einem zweiten Ausgleichsraum (46) verbunden ist, der teilweise mit Luft gefüllt ist und mit einem weiteren Flüssigkeitsraum in Verbindung steht, daß das Ventil derart in dem weiteren Flüssigkeitsraum angeordnet ist, daß keine Luft aus dem zweiten Ausgleichsraum (46) nach außen entweichen kann und daß die Luft als Luftpolster zwischen den teilweise mit Flüssigkeit gefüllten Ausgleichräumen (44, 46) und der Flüssigkeit des weiteren Flüssigkeitsraumes dient.

2. Ventil nach Anspruch 1, dadurch gekennzeichnet, daß der Anker (17) als Flachanker ausgebildet ist und von zwei Membranfedern (22, 23) gehalten ist.

3. Ventil nach Anspruch 1 und/oder 2, dadurch gekennzeichnet, daß dieses liegend in einem ölgefüllten Maschinenteil angeordnet ist.

4. Ventil nach einem der Ansprüche 1 bis 3, dadurch gekennzeichnet, daß der das Ventil aufnehmende Raum ein ölgefülltes Getriebegehäuse ist und daß das Ventil vollständig vom Öl umspült ist.

5. Ventil nach einem der Ansprüche 1 bis 4, dadurch gekennzeichnet, daß der Ventilteil gegenüber dem Ankerraum (16) durch eine im Gehäuse befestigte Gummimembran (27) abgedichtet ist.

6. Ventil nach einem der Ansprüche 1, 2 oder 5, dadurch gekennzeichnet, daß sich in der Bohrung (45) ein etwa becherförmiger Siebeinsatz (48) befindet, dessen offene Seite dem der Spule (13) näherliegenden Raum (44) zugewandt ist.

## Claims

1. Electromagnetically operated valve, in particular a proportional valve, with an armature (17), resiliently hinged on the housing (10) of the same by springs (22, 23), and an armature operated valve body (20) for pressure medium control, which is loaded by a compression spring (40) and movable with ample clearance within a hole (34) of the valve housing, in which arrangement the armature chamber (16) is filled with a fluid for the purpose of damping the armature, this fluid penetrating into a compensating chamber (44) which compensates for volume changes of the fluid and which is arranged on that part of the valve housing which faces away from the armature, characterized by the fact that the compensating chamber (44) is linked with a second compensating chamber (46) via a channel (45), with the compensating chamber (46) being partly filled with air and being linked to a further fluid chamber, that the valve is arranged in the further fluid chamber such that no air can escape from the second compensating chamber (46) to the outside and that the air serves as an air cushion between the compensating chambers (44, 46) which are partly filled with air, and the fluid of the further fluid chamber.

2. Valve in accordance with claim 1, characterized by the fact that the armature (17) is designed as a flat armature and held by two membrane springs (22, 23).

3. Valve in accordance with claim 1 and/or 2, characterized by the fact that this is arranged resting in an oil filled engine part.

4. Valve in accordance with one of the claims 1 to 3, characterized by the fact that the space accommodating the valve is an oil filled gear housing, and that the valve is fully flushed by oil.

5. Valve in accordance with one of the claims 1 to 4, characterized by the fact that the valve part is sealed against the armature chamber (16) by a rubber membrane (27) which is fixed within the housing.

6. Valve in accordance with one of the claims 1, 2, or 5, characterized by the fact that the hole (45) has a gauze insert (48) of approximately beaker shape fitted in the hole (45), the open side of this gauze insert facing the chamber (44) which is closer to the coil (13).

## Revendications

1. Soupape pouvant être actionnée de façon électromagnétique, en particulier soupape proportionnelle avec un induit (17) articulée de façon élastique sur le boîtier (10), avec des moyens élastiques (22, 23) et avec un corps de soupape (20) pouvant être actionné par cet induit pour commander le fluide sous pression, corps qui est comprimé par un ressort de pression (40) et peut se déplacer dans un alésage (34) du boîtier de la soupape avec suffisamment de jeu, et dans laquelle la chambre d'induit (16) est remplie d'huile pour assurer l'amortissement de l'induit, huile qui pénètre jusque dans une chambre d'équilibrage (44) servant à compenser les variations de volume du liquide, cette chambre d'équilibrage étant constituée sur la partie du boîtier de la soupape qui est située à l'opposé de l'induit, soupape caractérisée en ce que la chambre d'équilibrage (44) est reliée par l'intermédiaire d'un canal (45) à une seconde chambre d'équilibrage (46) qui est remplie en partie d'air et qui est en liaison avec une autre chambre de liquide, en ce que la soupape est disposée dans l'autre chambre de liquide de telle façon qu'il ne puisse pas s'échapper d'air à l'extérieur à partir de la seconde chambre d'équilibrage (46) et que l'air serve de coussin d'air entre les chambres d'équilibrage (44, 46) remplies en partie de liquide, et le liquide de l'autre chambre de liquide.

2. Soupape selon la revendication 1, caractérisée en ce que l'induit (17) est constitué sous la forme d'un induit plat et est maintenu par deux ressorts à membrane (22, 23).

3. Soupape selon la revendication 1 et/ou 2, caractérisée en ce qu'elle est disposée dans une partie de la machine qui est remplie d'huile.

4. Soupape selon l'une des revendications 1 à 3, caractérisée en ce que la chambre recevant la soupape est un carter de transmission rempli d'huile et en ce que la soupape est complètement parcourue par de l'huile.

5. Soupape selon l'une des revendications 1 à 4, caractérisée en ce qu'on assure l'étanchéité de la soupape par rapport à la chambre d'induit (16) au moyen d'une membrane en caoutchouc (27) fixée dans le boîtier.

6. Soupape selon l'une des revendications 1, 2 ou 5, caractérisée en ce qu'il se trouve dans l'alésage (45) un tamis inséré (48) ayant à peu près la forme d'une cuvette dont le côté ouvert est tourné vers la chambre (44) se trouvant le plus près de la bobine (13).
